# EUROPÄISCHE PATENTANMELDUNG

(11) **EP 2 253 862 A1**
(43) Veröffentlichungstag der Anmeldung: **24.11.2010**
(21) Anmeldenummer: 09160586.5
(22) Anmeldetag: 19.05.2009
(51) Int. Cl.: F16F 9/34, F16F 9/43, F16F 9/06

(54) **Dämpfungseinrichtung für Radfahrzeuge**

(71) Anmelder: HEMSCHEIDT FAHRWERKTECHNIK GmbH & Co. KG, 42781 Haan-Gruiten (DE)
(72) Erfinder: Runkel, Walter, 53547, Leubsdorf (DE)
(74) Vertreter: Patentanwälte Dr. Solf & Zapf

(57) **Zusammenfassung**

Die vorliegende Erfindung betrifft eine Dämpfungseinrichtung (1) zur Stoß- und/oder Schwingungsdämpfung in Radfahrzeugen, mit mindestens einem teleskopartigen, hydraulischen Dämpferzylinder (2) mit einem in einem Zylinder (4) relativbeweglich geführten Kolben (6). Der Kolben (6) weist einseitig eine umfangsgemäß abgedichtet aus dem Zylinder (4) nach außen geführte Kolbenstange (8) auf und teilt innerhalb des Zylinders (4) zwei Arbeitsräume (10, 12) voneinander ab, und zwar einen die Kolbenstange (8) umschließenden Ringraum (10) und einen gegenüberliegenden Zylinderraum (12). Die Arbeitsräume (10, 12) sind mit einem hydraulischen Dämpfungsmedium gefüllt und über eine Dämpfungsventilanordnung (14) miteinander und mit einem Ausgleichsraum (16) hydraulisch verbunden. Die Dämpfungsventilanordnung (14) ist außerhalb des Dämpferzylinders (2) angeordnet und hydraulisch mit den über den Kolben (6) druckdicht voneinander getrennten Arbeitsräumen (10, 12) verbunden. Dadurch kann über eine Zusatzventilanordnung (20) der Dämpferzylinder (2) hydraulisch blockiert und/oder zwangsweise hydraulisch ausgefahren oder eingezogen werden.

## Beschreibung

Die vorliegende Erfindung betrifft gemäß dem Oberbegriff des Anspruchs 1 eine Dämpfungseinrichtung zur Stoß- und/oder Schwingungsdämpfung in Radfahrzeugen, mit mindestens einem teleskopartigen, hydraulischen Dämpferzylinder mit einem in einem Zylinder relativbeweglich geführten Kolben, wobei der Kolben einseitig eine umfangsgemäß abgedichtet aus dem Zylinder nach außen geführte Kolbenstange aufweist und innerhalb des Zylinders zwei Arbeitsräume, und zwar einen die Kolbenstange umschließenden Ringraum und einen gegenüberliegenden Zylinderraum, voneinander abteilt, und wobei die Arbeitsräume mit einem hydraulischen Dämpfungsmedium gefüllt und über eine Dämpfungsventilanordnung miteinander und mit einem Ausgleichsraum hydraulisch verbunden sind.

Bekannte Stoß- und Schwingungsdämpfer der allgemein üblichen Bauart (siehe dazu beispielsweise JP 2005 188601 A und JP 2005 155793 A) sind in aller Regel als so genannte Zweirohrdämpfer ausgebildet, wobei der Ausgleichsraum als eine den Zylinder koaxial umschließende Ringkammer ausgebildet ist. Dabei besteht die Dämpfungsventilanordnung aus Dämpfungsventilen, die in Strömungspassagen des Kolbens innerhalb des Dämpfers angeordnet sind. Durch diese inneren Verbindungen zwischen den Arbeitsräumen des Dämpferzylinders sind Kolben und Zylinder stets mit einer bestimmten Kraft relativ zueinander beweglich. Der als Ringkammer ausgebildete Ausgleichsraum ist im Fußbereich des Zylinders ebenfalls stets mit dem Zylinderraum verbunden, so dass bei einer Einfederungsdämpfung ein bestimmtes, dem jeweils in den Zylinder eingeschobenen Kolbenstangen-Volumen entsprechendes Volumen des Dämpfungsmediums in den Ausgleichsraum verdrängt wird. Die Ausgleichs-Ringkammer enthält oberhalb des jeweils enthaltenen hydraulischen Dämpfungsmediums ein Gaspolster (beispielsweise Luft). Dadurch ist allerdings die räumliche Anordnung bzw. Ausrichtung des Dämpfers nicht beliebig, sondern es ist nur eine im Wesentlichen vertikale Anordnung möglich, um eine Vermischung des Dämpfungsmediums mit Gas/Luft zu vermeiden. Weiterhin führt die direkt den Zylinder umschließende Anordnung der Ausgleichskammer zu einer großen Bauform (großer Durchmesser).

Der vorliegenden Erfindung liegt die Aufgabe zu Grunde, eine Dämpfungseinrichtung der genannten Art so zu verbessern, dass sie für zusätzliche Funktionen ausgelegt sein kann. Dabei soll der/jeder Dämpferzylinder insbesondere auch mit kompakter Bauform in weitgehend beliebiger Raumorientierung eingesetzt werden können.

Erfindungsgemäß wird dies durch die Merkmale des Anspruchs 1 erreicht. Vorteilhafte Ausgestaltungsmerkmale sind in den abhängigen Ansprüchen sowie auch in der anschließenden Beschreibung enthalten.

Erfindungsgemäß ist demnach vorgesehen, dass die Dämpfungsventilanordnung außerhalb des Dämpferzylinders angeordnet und hydraulisch mit den über den Kolben druckdicht voneinander getrennten Arbeitsräumen verbunden ist. Durch diese erfindungsgemäße Auslagerung der Dämpfungsventilanordnung aus dem Dämpferzylinder nach außen ist es vorteilhafterweise möglich, über eine Zusatzventilanordnung den Dämpferzylinder durch Sperren der externen hydraulischen Verbindung zwischen den Arbeitsräumen hydraulisch zu blockieren und/oder zwangsweise durch Zuführen oder Ablassen eines Volumenteils des Dämpfungsmediums in einen oder aus einem der Arbeitsräume hydraulisch auszufahren oder einzuziehen. Dadurch ist es erfindungsgemäß erstmals möglich, einen Dämpferzylinder bezüglich seiner Bewegungen hydraulisch zu blockieren. Alternativ oder zusätzlich ist es möglich, den Dämpferzylinder zwangsweise auszufahren, um beispielsweise das Niveau eines Fahrzeugs zu erhöhen, oder den Dämpferzylinder zwangsweise einzuziehen, um beispielsweise eine Achse (Liftachse) zu einem Fahrzeugrahmen anzuheben oder aber den Rahmen in Richtung der Achse nach unten zu ziehen und so das Fahrzeugniveau abzusenken.

In weiterer vorteilhafter Ausgestaltung ist hierbei vorgesehen, dass der Ausgleichsraum in einem separaten, von dem Dämpferzylinder räumlich getrennt anzuordnenden und mit den Arbeitsräumen des Dämpferzylinders mittelbar über die Dämpfungsventilanordnung hydraulisch verbundenen Vorratsbehälter angeordnet ist. Durch den externen Vorratsbehälter kann der eigentliche Dämpferzylinder mit geringerem Durchmesser sehr kompakt ausgebildet sein. Zudem kann er lageunabhängig, in praktisch beliebiger Raumorientierung eingesetzt werden, weil ja der externe Vorratsbehälter an einer anderen Stelle innerhalb eines Fahrzeugs räumlich getrennt von dem Dämpferzylinder montiert werden kann. Dabei ist es weiterhin vorteilhaft, wenn der Vorratsbehälter als Druckspeicher mit einem den Ausgleichsraum von einer Druckkammer trennenden Trennelement ausgebildet ist. Hierdurch ist er ebenfalls lageunabhängig in beliebiger Orientierung montierbar. Vorteilhafterweise kann durch den externen Vorratsbehälter auch das Gesamtvolumen des hydraulischen Dämpfungsmediums nahezu beliebig vergrößert werden. Hierdurch und auch durch die räumliche Trennung des Ausgleichsraums vom Dämpferzylinder kann eine deutliche Reduzierung der Arbeitstemperatur erreicht werden, zumal auch durch Vermeidung eines den Dämpferzylinder umschließenden Ausgleichsraums ein thermisch isolierender Zylindermantel vermieden wird, und durch die Oberfläche des zusätzlichen Vorratsbehälters wird eine effektive Kühlung durch Wärmeabgabe an die Umgebung erreicht. Die verringerte Arbeitstemperatur führt zu einer verlängerten Lebensdauer des Dämpferzylinders insbesondere im Bereich von Dichtungen.

Bezüglich der Ausgestaltung des Vorratsbehälters als Druckspeicher ist es vorteilhaft, wenn das Trennelement als ein in dem zylindrischen Vorratsbehälter schwimmend, frei verschiebbar geführter Trennkolben ausgebildet ist. Alternativ kann aber auch eine flexible Wandung (Membran oder Blase) als Trennelement vorgesehen sein. In jedem Fall enthält die Druckkammer ein insbesondere pneumatisches Druckmedium (Gas, insbesondere Stickstoff) mit einem geringfügigen Überdruck insbesondere im Bereich von 5 bis 20 bar. Dieser Vorspanndruck gewährleistet eine gute Rückströmung des hydraulischen Dämpfungsmediums aus dem Ausgleichsraum zurück in den Dämpferzylinder bei einer Ausfederungsdämpfung.

In weiterer vorteilhafter Ausgestaltung der Erfindung ist die Dämpfungsventilanordnung gemeinsam mit der Zusatzventilanordnung als eine baueinheitliche Ventileinheit ausgebildet. Über diese Ventileinheit sind einerseits die Arbeitsräume des Dämpferzylinders miteinander verbunden und andererseits auch der Ausgleichsraum angeschlossen.

In weiterer bevorzugter Ausgestaltung der erfindungsgemäßen Dämpfungseinrichtung können insbesondere in einem Fahrzeug mindestens zwei, beispielsweise auch vier Dämpferzylinder bezüglich ihrer Arbeitsräume mit dem gleichen Ausgleichsraum, insbesondere mit demselben externen Vorratsbehälter verbunden sein. Dies führt zu einer weiteren Reduzierung des erforderlichen Bauraums, indem der einzige, gemeinsame Vorratsbehälter an einer geeigneten Stelle im Fahrzeug untergebracht werden kann. Zudem hat diese hydraulische Zusammenschaltung den zusätzlichen Vorteil eines Wärmeaustausches zwischen den einzelnen Dämpferzylindern und deren zugehörigen Dämpfungsventilanordnungen, indem die Dämpfungsmedien über den gemeinsamen Vorratsbehälter in kommunizierender Verbindung stehen. Es tritt dadurch zwangsläufig ein Austausch von Dämpfungsmedium zwischen den einzelnen Dämpferzylindern und damit auch ein Wärmeaustausch auf.

Im Folgenden soll nun die Erfindung anhand der Zeichnung beispielhaft genauer erläutert werden. Es zeigen:
- Fig. 1: eine erfindungsgemäße Dämpfungseinrichtung mit zum Teil längs geschnittener und zum Teil aufgebrochener Darstellung der Komponenten,
- Fig. 2: eine gegenüber Fig. 1 vergrößerte Schnittdarstellung einer der Komponenten der erfindungsgemäßen Dämpfungseinrichtung, und zwar einer bevorzugten Ausgestaltung einer Ventileinheit,
- Fig. 3: eine Ausführung der Dämpfungseinrichtung mit zwei Dämpferzylindern beispielhaft für die Räder einer Fahrzeugachse und
- Fig. 4: eine vorteilhafte Alternative zur Ausführung nach Fig. 3.

In den verschiedenen Figuren der Zeichnung sind gleiche Teile stets mit den gleichen Bezugszeichen versehen.

Eine erfindungsgemäße Dämpfungseinrichtung 1 dient zur Stoß- und/oder Schwingungsdämpfung von Rad-Federungsbewegungen in Radfahrzeugen. Dazu besteht die Dämpfungseinrichtung 1 aus mindestens einem teleskopartigen, hydraulischen Dämpferzylinder 2 mit einem in einem Zylinder 4 linear relativbeweglich geführten Kolben 6. Der Kolben 6 weist auf einer Seite eine umfangsgemäß abgedichtet in Richtung der Bewegungsachse (Längsachse des Zylinders 4) aus dem Zylinder 4 nach außen geführte Kolbenstange 8 auf. Der Dämpferzylinder 2 ist mit den voneinander wegweisenden Enden des Zylinders 4 und der Kolbenstange 8 zwischen einen nicht dargestellten Fahrzeugrahmen und eine Radaufhängung eines Fahrzeuges zu montieren. Dadurch wird der Dämpferzylinder 2 bei auftretenden Rad-Federungsbewegungen bewegt, d. h. teleskopartig eingeschoben oder ausgezogen. Der Kolben 6 teilt innerhalb des Zylinders 4 zwei Arbeitsräume voneinander ab, und zwar einen die Kolbenstange 8 umschließenden Ringraum 10 von einem gegenüberliegenden Zylinderraum 12. Die Arbeitsräume 10, 12 sind mit einem hydraulischen Dämpfungsmedium (Hydrauliköl) gefüllt und über eine Dämpfungsventilanordnung 14 einerseits miteinander und andererseits mit einem Ausgleichsraum 16 hydraulisch verbunden. Der Ausgleichsraum 16 dient bei den Dämpfungsbewegungen des Dämpferzylinders 2 jeweils zur Aufnahme oder zur Abgabe eines bestimmten Volumenanteils des Dämpfungsmediums, wobei dieser Volumenanteil dem jeweiligen Volumen einer Teil-Länge der Kolbenstange 8 entspricht, die jeweils in den Zylinder 4 eingeschoben oder aus dem Zylinder 4 herausgezogen wird. Beim Einschieben des Kolbens 6 in den Zylinder 4 (Einfederungsdämpfung) wird aus dem Zylinderraum 12 ein bestimmter Volumenanteil des Dämpfungsmediums verdrängt, und wegen des um den Querschnitt der Kolbenstange 8 reduzierten Ringquerschnitts des Ringraums 10 kann dieser nicht das vollständige aus dem Zylinderraum 12 verdrängte Volumen aufnehmen. Die Volumendifferenz strömt daher in den Ausgleichsraum 16. Bei einer umgekehrten Auszugsbewegung (Ausfederungsdämpfung) strömt das Dämpfungsmedium anteilig aus dem Ringraum 10 und aus dem Ausgleichsraum 16 in den Zylinderraum 12. Die beschriebenen Strömungen werden über die Dämpfungsventilanordnung 14 gedämpft (gedrosselt), wobei für eine Anwendung in einem Fahrzeug üblicherweise die Dämpfungsventilanordnung 14 so ausgelegt ist, dass bei der Einschubbewegung (Einfederungsdämpfung) eine geringere Dämpfungskraft und bei der Auszugsbewegung (Ausfederungsdämpfung) eine höhere Dämpfungskraft zu überwinden ist.

Erfindungsgemäß ist nun vorgesehen, dass die Dämpfungsventilanordnung 14 extern, außerhalb des Dämpferzylinders 2 angeordnet und hydraulisch mit den über den Kolben 6 druckdicht voneinander getrennten Arbeitsräumen 10, 12 verbunden ist. Für die innere druckdichte Trennung zwischen den Arbeitsräumen 10, 12 weist der Kolben 6 mindestens eine umfangsgemäße Kolbendichtung 18 zur druckdichten Abdichtung des Ringspaltes zur Innenwand des Zylinders 4 hin auf.

Durch die erfindungsgemäße Auslagerung der Dämpfungsventilanordnung 14 aus dem Dämpferzylinder 2 extern nach außen und in Kombination damit durch die druckdichte innere Trennung zwischen den Arbeitsräumen 10, 12 ist es vorteilhafterweise möglich, mittels einer Zusatzventilanordnung 20 den Dämpferzylinder 2 durch Sperren der externen hydraulischen Verbindung zwischen den Arbeitsräumen 10, 12 hydraulisch zu blockieren. Alternativ oder zusätzlich kann der Dämpferzylinder 2 zwangsweise durch Zuführen oder Ablassen eines Volumenteils des Dämpfungsmediums hydraulisch ausgefahren oder eingezogen werden. Dies wird im Folgenden noch genauer erläutert werden.

Vorteilhafterweise ist der Ausgleichsraum 16 in einem separaten, extern von dem Dämpferzylinder 2 räumlich getrennt anzuordnenden und mit den Arbeitsräumen 10, 12 des Dämpferzylinders 2 mittelbar über die Dämpfungsventilanordnung 14 hydraulisch verbundenen Vorratsbehälter 22 angeordnet. Hierbei ist die Dämpfungsventilanordnung 14 mit den Arbeitsräumen 10, 12 des Dämpferzylinders 2 und mit dem Ausgleichsraum 16 über jeweils eine Hydraulikleitung 24, 26, 28 verbunden.

In der hydraulischen Verbindung zwischen den zu den Arbeitsräumen 10, 12 führenden Hydraulikleitungen 24, 26 weist die Dämpfungsventilanordnung 14 zwei gegensinnig wirkende Dämpfungsventile 30, 32 auf. Ein erstes Dämpfungsventil 30 dämpft eine bei einer Einfederungsbewegung des Dämpferzylinders 2 auftretende Strömung des Dämpfungsmediums mit einem bestimmten Drosselwiderstand. Ferner dämpft ein zweites Dämpfungsventil 32 eine umgekehrte, bei einer Ausfederungsbewegung des Dämpferzylinders 2 auftretende Strömung des Dämpfungsmediums mit einem bestimmten Drosselwiderstand. Bevorzugt ist der Drosselwiderstand beim Einfedern relativ gering (schwache Dämpfung), während das Ausfedern mit höherem Drosselwiderstand stärker gedämpft wird.

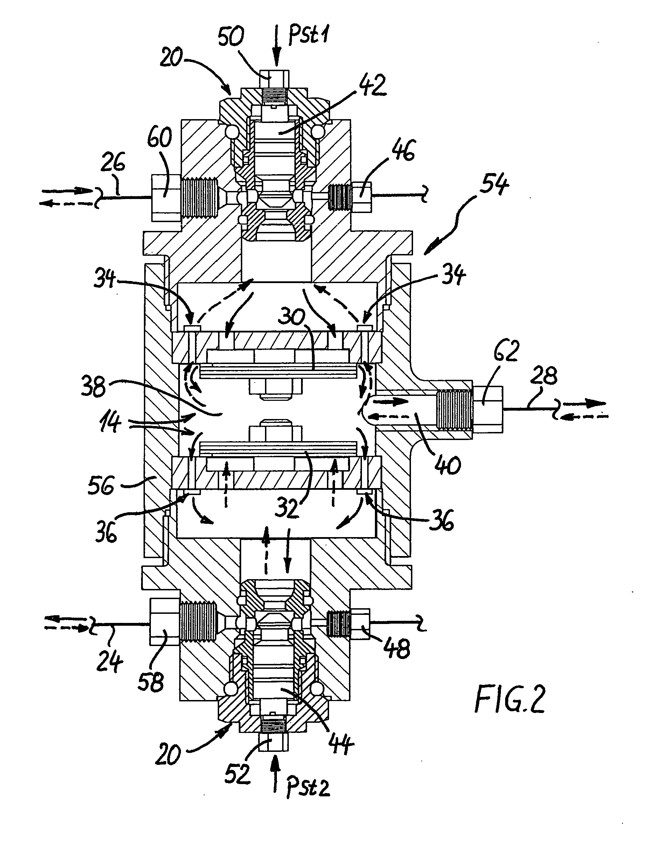

Grundsätzlich können die beiden Dämpfungsventile 30, 32 gegensinnig parallel zueinander angeordnet sein. In der dargestellten, bevorzugten Ausführung ist allerdings vorgesehen, dass die zwei Dämpfungsventile 30, 32 gegensinnig in Reihe hintereinander in der hydraulischen Verbindung zwischen den Arbeitsräumen 10, 12 des Dämpferzylinders 2 angeordnet sind. Deshalb ist jedem Dämpfungsventil 30, 32 mindestens ein Rückschlagventil 34 bzw. 36 parallel geschaltet, welches bei der jeweils über das zugehörige Dämpfungsventil 30, 32 gedämpften Strömung schließt und für eine umgekehrte Strömung im Wesentlichen ohne Drosselwiderstand öffnet. Zu den Rückschlagventilen 34, 36 wird insbesondere auf die vergrößerte Darstellung in Fig. 2 verwiesen. Ein zwischen den beiden gegensinnig in Reihe liegenden Dämpfungsventilen 30, 32 angeordneter Übergangsbereich 38 der hydraulischen Verbindung ist über einen Abzweig 40 mit dem Ausgleichsraum 16 bzw. dem Vorratsbehälter 22 verbunden.

Jedes Dämpfungsventil 30, 32 weist ein Ventilelement auf, welches mindestens eine Strömungsöffnung derart mit einer bestimmten Schließvorspannung abdeckt, dass durch die jeweils zu dämpfende Strömung das Ventilelement gegen seine Vorspannung geöffnet wird. Im Falle einer umgekehrten Strömungsrichtung schließt das Ventilelement nach Art eines Rückschlagventils, wobei dann das Dämpfungsmedium über das/die parallele/n Rückschlagventil/e 34 bzw. 36 strömt. Das Ventilelement kann - wie dargestellt - von einem Blattfederelement oder einem Blattfederpaket gebildet sein, dessen Vorspannung über eine Verschraubung eingestellt werden kann.

Was nun die bereits allgemein erwähnte Zusatzventilanordnung 20 betrifft, so weist diese ein dem ersten Dämpfungsventil 30 vorgeschaltetes erstes Absperrventil 42 sowie ein dem zweiten Dämpfungsventil 32 vorgeschaltetes zweites Absperrventil 44 auf. Mit dem ersten Absperrventil 42 kann die hydraulische Verbindung zwischen dem Zylinderraum 12 und dem Ausgleichsraum 16 sowie auch dem Ringraum 10 geschlossen (gesperrt) werden. Entsprechend kann mit dem zweiten Absperrventil 44 die hydraulische Verbindung zwischen dem Ringraum 10 und dem Ausgleichsraum 16 sowie auch dem Zylinderraum 12 geschlossen (gesperrt) werden. Dadurch lässt sich zunächst der Dämpferzylinder 2 hydraulisch blockieren.

In vorteilhafter Ausgestaltung kann über einen ersten Anschluss 46 ein Volumenteil des Dämpfungsmediums in den Zylinderraum 12 eingeführt oder aus dem Zylinderraum 12 entnommen (abgelassen) werden. Bevorzugt kann weiterhin über einen zweiten Anschluss 48 ein Volumenteil des Dämpfungsmediums auch in den Ringraum 10 eingeführt oder aus dem Ringraum 10 entnommen (abgelassen) werden. Der Zweck dieser Maßnahmen wird im Folgenden noch erläutert werden.

In weiterer bevorzugter Ausgestaltung sind die Absperrventile 42, 44 jeweils über einen Steueranschluss 50, 52 durch Beaufschlagung mit einem pneumatischen, insbesondere aber hydraulischen Steuerdruck p_{St1} bzw. p_{St2} betätigbar. Dazu ist jedes Absperrventil 42, 44 zweckmäßig als Kegelsitzventil mit einem beweglichen Ventilstößel ausgebildet, der mittels Beaufschlagung mit dem jeweiligen Steuerdruck in seine Schließstellung bewegbar ist. Seine Öffnungsstellung kann vorzugsweise durch Federkraft-Rückstellung erreicht werden.

In der dargestellten, bevorzugten Ausführungsform der erfindungsgemäßen Dämpfungseinrichtung 1 ist die Dämpfungsventilanordnung 14 zusammen mit der Zusatzventilanordnung 20 als eine gemeinsame, ein einheitliches Bauteil bildende Ventileinheit 54 ausgebildet. Hierzu wird insbesondere auf die gesonderte und vergrößerte Darstellung in Fig. 2 verwiesen. Demnach weist die Ventileinheit 54 ein gemeinsames Ventilgehäuse 56 für die Dämpfungsventile 30, 32 mit ihren zugehörigen Rückschlagventilen 34, 36 sowie für die Absperrventile 42, 44 auf. Hierbei ist die Ventileinheit 54 bevorzugt spiegelsymmetrisch bezüglich einer durch den Übergangsbereich 38 zwischen den Dämpfungsventilen 30, 32 und durch den Abzweig 40 verlaufenden Symmetrieebene ausgebildet. Das Ventilgehäuse 56 weist einen Anschluss 58 für die Hydraulikleitung 24 zum Ringraum 10, einen weiteren Anschluss 60 für die Hydraulikleitung 26 zum Zylinderraum 12, im Bereich des Abzweigs 40 einen Anschluss 62 für die Hydraulikleitung 28 zum Ausgleichsraum 16, die oben erwähnten Anschlüsse 46, 48 für Hydraulikleitungen zum Zuführen oder Entnehmen von Dämpfungsmedium sowie auch die Steueranschlüsse 50, 52 der Absperrventile 42, 44 auf.

Weiterhin ist bevorzugt der Vorratsbehälter 22 als Druckspeicher mit einem den Ausgleichsraum 16 von einer Druckkammer 64 trennenden Trennelement ausgebildet, wobei das Trennelement vorzugsweise als ein in dem dazu zylindrisch ausgebildeten Vorratsbehälter 22 frei verschiebbar (schwimmend) geführter Trennkolben 66 ausgebildet ist. Die Druckkammer 64 enthält ein insbesondere pneumatisches Druckmedium (Gas, vorzugsweise Stickstoff) mit einem Vorspanndruck im Bereich von 5 bis 20 bar. Der Druckspeicher kann - wie dargestellt - als Druckwandler ausgebildet sein, wozu der Trennkolben 66 mit zwei gegenüberliegenden und unterschiedlich groß ausgebildeten, vom jeweiligen Druck beaufschlagten Flächen ausgebildet ist. Konkret ist dazu der Trennkolben 66 auf einer Seite mit einer Trennkolbenstange 68 verbunden, die umfangsgemäß abgedichtet aus dem Vorratsbehälter 22 nach außen geführt ist.

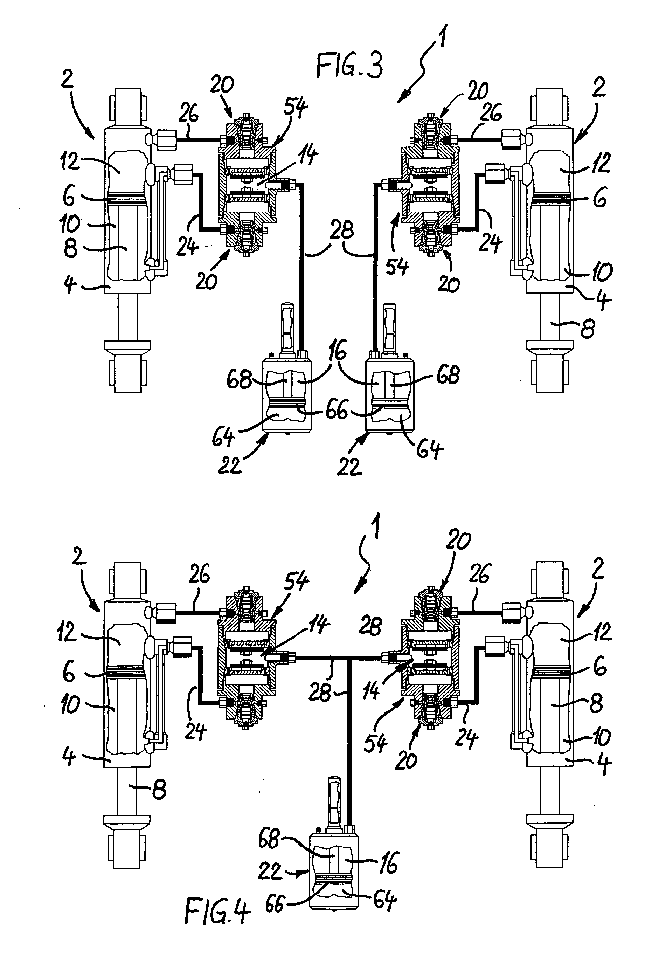

Wie in Fig. 3 dargestellt ist, kann in einem Fahrzeug jedem Rad eine gesonderte Dämpfungseinrichtung 1 mit einem Dämpferzylinder 2 und dem zugehörigen Ausgleichsraum 16 bzw. dem Vorratsbehälter 22 zugeordnet sein. Wie alternativ in Fig. 4 dargestellt ist, können aber auch mindestens zwei Dämpferzylinder 2 (z. B. einer Fahrzeugachse) mit dem gleichen externen Ausgleichsraum 16 bzw. mit dem gleichen Vorratsbehälter 22 verbunden sein, und zwar über die Anschlüsse 62 der beiden Ventileinheiten 54 und die Hydraulikleitungen 28.

Der/jeder Dämpferzylinder 2 wirkt mit einem gesonderten, in der Zeichnung nicht dargestellten Federelement zusammen, wobei das Federelement die jeweilige Last zwischen Rad und Rahmen federnd abstützt. Das Federelement kann mechanisch als Schraubendruckfeder, Blattfeder oder dergleichen oder pneumatisch als Luftfeder oder auch hydropneumatisch ausgebildet sein.

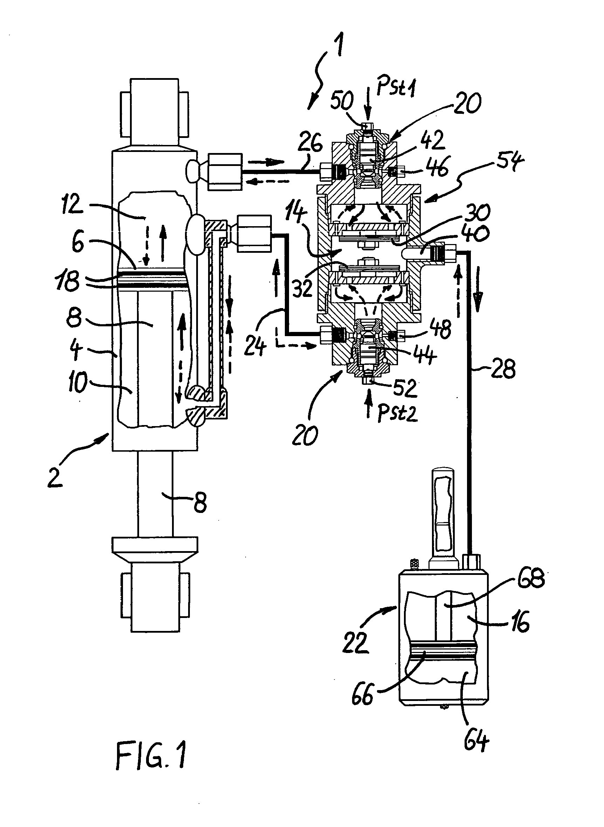

Im Folgenden soll noch die Wirkungsweise der erfindungsgemäßen Dämpfungseinrichtung 1 insbesondere anhand der Figuren 1 und 2 erläutert werden.

Der Dämpferzylinder 2 hat selbst keine Federwirkung, sondern dient ausschließlich im Zusammenwirken mit der Dämpfungsventilanordnung 14 zur Schwingungsdämpfung sowie erfindungsgemäß im Zusammenwirken mit der Zusatzventilanordnung 20 für bestimmte Zusatzfunktionen.

Die Arbeitsweise für die Dämpfung ist grundsätzlich die gleiche wie bei herkömmlichen Stoßdämpfern. Die Vorgänge bei einer Einfederungsdämpfung sind in den Figuren 1 und 2 jeweils mit voll eingezeichneten Pfeilen und die Vorgänge bei einer Ausfederungsdämpfung mit gestrichelt eingezeichneten Pfeilen veranschaulicht. Demnach wird bei einer Einfederungsdämpfung ein bestimmter Volumenanteil des Dämpfungsmediums aus dem Zylinderraum 12 verdrängt, und zwar über die Dämpfungsventilanordnung 14 anteilig in den Ringraum 10 und anteilig in den Ausgleichsraum 16. Das für diese Dämpfungsrichtung vorgesehene erste Dämpfungsventil 30 ist relativ gering vorgespannt, um die Einfederung relativ gering zu dämpfen. Eine umgekehrte Ausfederungsdämpfung wird über das zweite Dämpfungsventil 32 stärker gedämpft. Dabei strömt das Dämpfungsmedium anteilig aus dem Ringraum 10 und dem Ausgleichsraum 16 zurück in den Zylinderraum 12.

Erfindungsgemäß kann der Dämpferzylinder 2 hydraulisch blockiert werden. Dazu werden bevorzugt beide Absperrventile 42, 44 in ihre Sperrstellung geschaltet. Das Hydraulikmedium kann dadurch nicht mehr in der zuvor beschriebenen Weise in Strömung versetzt werden, sondern es ist in den Arbeitsräumen 10, 12 eingeschlossen, so dass sich der Kolben 6 in dem Zylinder 4 nicht mehr bewegen kann, weil das eingeschlossene hydraulische Dämpfungsmedium praktisch inkompressibel ist.

Da die Absperrventile 42, 44 aus Sicherheitsgründen nicht elektrisch, sondern bevorzugt hydraulisch betätigt werden, ist eine Druckversorgung erforderlich. Es wird jedoch lediglich der insbesondere hydraulische Steuerdruck benötigt, aber praktisch kaum ein nennenswertes Volumen (nur wenige cm³). Dadurch kann der jeweilige Steuerdruck zum Verschließen der Absperrventile 42, 44 während der Blockierphase durch einen permanent anstehenden Druck realisiert werden. Dieser Druck kann recht einfach durch einen in der Zeichnung nicht dargestellten Druckspeicher auf Dauer aufrechterhalten werden. Hierdurch ist es nicht erforderlich, dass etwa eine Druckölversorgung während der gesamten Blockierphase aktiv betrieben werden muss.

Als weitere Zusatzfunktion ist es mit der erfindungsgemäßen Dämpfungseinrichtung 1 möglich, ein Rad oder eine so genannte Liftachse nach oben zum Fahrzeugrahmen anzuheben bzw. den Fahrzeugrahmen nach unten zum Rad hin zu ziehen. Hierzu wird zunächst das zweite Absperrventil 44 mit dem Steuerdruck p_{St2} beaufschlagt und dadurch geschlossen. Dadurch wird die Hydraulikverbindung zwischen dem Ringraum 10 und der Dämpfungsventilanordnung 14 verschlossen. In diesem Zustand kann über den Anschluss 48 ein bestimmtes Volumen des Dämpfungsmediums in den Ringraum 10 eingeführt werden, so dass durch das zusätzlich zugeführte Volumen der Kolben 6 in den Zylinder 4 eingeschoben wird. Dadurch verkleinert sich das Volumen des Zylinderraums 12, so dass ein bestimmtes Volumen des Dämpfungsmediums in den Ausgleichsraum 16 verdrängt wird. Durch diese Kolbenbewegung wird auch die Kolbenstange 8 eingezogen; der Dämpferzylinder 2 wird folglich kürzer. Hierdurch wird das Rad angehoben bzw. der Fahrzeugrahmen gegen das Rad und gegen die Federkraft der Fahrzeugfederung heruntergezogen. Für diese Funktion ist es natürlich erforderlich, die dem Ringraum 10 zugewandte Fläche des Kolbens 6 hinsichtlich ihrer Größe so zu dimensionieren, dass der hydraulische Druck in der Lage ist, gegen die Federkraft der Fahrzeugfederung zu arbeiten.

Soll nachfolgend das Rad wieder abgesenkt oder der Fahrzeugrahmen wieder angehoben werden, so wird der Anschluss 48 auf einen Tank geschaltet, so dass das Dämpfungsmedium wieder abfließen kann. Durch das Eigengewicht der Radaufhängung und/oder durch die Federkraft der Fahrzeugfederung wird die Kolbenstange 8 wieder aus dem Zylinder 4 herausgeschoben. Aus dem Ringraum 10 fließt das Dämpfungsmedium entsprechend über den Anschluss 48 in den Tank ab, und aus dem Ausgleichsraum 16 wird ein entsprechendes Volumen des Dämpfungsmediums wieder in den Zylinderraum 12 gedrängt. Wenn wieder das normale Fahrzeugniveau erreicht oder das Rad komplett abgesenkt ist, wird das Absperrventil 44 wieder geöffnet, indem der Steuerdruck p_{St2} abgeschaltet wird.

Es sei bemerkt, dass für die zuvor beschriebene Funktion das zweite Absperrventil 44 ausreicht.

Erfindungsgemäß ist aber durch das erste Absperrventil 42 eine weitere Zusatzfunktion möglich, und zwar kann das Fahrzeugniveau angehoben werden. Dazu wird das erste Absperrventil 42 mit dem Steuerdruck p_{St1} beaufschlagt und so geschlossen. Danach wird über den Anschluss 46 ein bestimmtes Volumen des Dämpfungsmediums in den Zylinderraum 12 eingeführt, wodurch der Kolben 6 mit der Kolbenstange 8 aus dem Zylinder 4 ausgeschoben wird. Dadurch verlängert sich der Dämpferzylinder 2, so dass der Fahrzeugrahmen gegenüber dem Rad angehoben wird. Dabei wird ein Volumenanteil des Dämpfungsmediums aus dem Ringraum 10 in den Ausgleichsraum 16 verdrängt. Zum nachfolgenden Absenken wird der Anschluss 46 auf einen Tank geschaltet, so dass Dämpfungsmedium aus dem Zylinderraum 12 wieder abfließen kann. Das Fahrzeug senkt sich wieder ab. Dies geschieht so lange, bis die Fahrzeugfeder so weit komprimiert ist, dass sie die Fahrzeuglast tragen kann. In diesem Zustand ist die normale Fahrposition wieder erreicht.

Es sei noch erwähnt, dass selbstverständlich der jeweilige Anschluss 46, 48 nach Erreichen des jeweiligen Fahrzeugniveaus wieder verschlossen werden muss. Andernfalls würde das Dämpfungsmedium während der normalen Dämpferfunktion in den Tank abfließen. Dies gilt für alle beschriebenen Zusatzfunktionen.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Dämpfungseinrichtung (1) zur Stoß- und/oder Schwingungsdämpfung in Radfahrzeugen, mit mindestens einem teleskopartigen, hydraulischen Dämpferzylinder (2) mit einem in einem Zylinder (4) relativbeweglich geführten Kolben (6), wobei der Kolben (6) einseitig eine umfangsgemäß abgedichtet aus dem Zylinder (4) nach außen geführte Kolbenstange (8) aufweist und innerhalb des Zylinders (4) zwei Arbeitsräume (10, 12), und zwar einen die Kolbenstange (8) umschließenden Ringraum (10) und einen gegenüberliegenden Zylinderraum (12), voneinander abteilt, und wobei die Arbeitsräume (10, 12) mit einem hydraulischen Dämpfungsmedium gefüllt und über eine Dämpfungsventilanordnung (14) miteinander und mit einem Ausgleichsraum (16) hydraulisch verbunden sind,
**dadurch gekennzeichnet, dass** die Dämpfungsventilanordnung (14) außerhalb des Dämpferzylinders (2) angeordnet und hydraulisch mit den über den Kolben (6) druckdicht voneinander getrennten Arbeitsräumen (10, 12) verbunden ist.

2. Dämpfungseinrichtung nach Anspruch 1,
**gekennzeichnet durch** eine derart ausgelegte Zusatzventilanordnung (20), dass der Dämpferzylinder (2) hydraulisch blockierbar und/oder zwangsweise **durch** Zuführen oder Ablassen eines Volumenteils des Dämpfungsmediums hydraulisch ausfahrbar oder einziehbar ist.

3. Dämpfungseinrichtung nach Anspruch 1 oder 2,
**dadurch gekennzeichnet, dass** der Ausgleichsraum (16) in einem separaten, von dem Dämpferzylinder (2) räumlich getrennt anzuordnenden und mit den Arbeitsräumen (10, 12) des Dämpferzylinders (2) - insbesondere mittelbar über die Dämpfungsventilanordnung (14) - hydraulisch verbundenen Vorratsbehälter (22) angeordnet ist.

4. Dämpfungseinrichtung nach einem der Ansprüche 1 bis 3,
**dadurch gekennzeichnet, dass** die Dämpfungsventilanordnung (14) mit den Arbeitsräumen (10, 12) des Dämpferzylinders (2) und/oder mit dem Ausgleichsraum (16) über jeweils eine Hydraulikleitung (24, 26, 28) verbunden ist.

5. Dämpfungseinrichtung nach einem der Ansprüche 1 bis 4,
**dadurch gekennzeichnet, dass** die Dämpfungsventilanordnung (14) in der hydraulischen Verbindung zwischen den Arbeitsräumen (10, 12) zwei gegensinnig wirkende Dämpfungsventile (30, 32) aufweist, wobei ein erstes Dämpfungsventil (30) eine bei einer Einfederungsbewegung des Dämpferzylinders (2) auftretende Strömung des Dämpfungsmediums mit einem bestimmten Drosselwiderstand dämpft, und wobei ein zweites Dämpfungsventil (32) eine umgekehrte, bei einer Ausfederungsbewegung des Dämpferzylinders (2) auftretende Strömung des Dämpfungsmediums mit einem bestimmten Drosselwiderstand dämpft.

6. Dämpfungseinrichtung nach Anspruch 5,
**dadurch gekennzeichnet, dass** die zwei Dämpfungsventile (30, 32) gegensinnig in Reihe hintereinander in der hydraulischen Verbindung zwischen den Arbeitsräumen (10, 12) des Dämpferzylinders (2) angeordnet sind, wobei jedem Dämpfungsventil (30, 32) mindestens ein Rückschlagventil (34, 36) parallel geschaltet ist, welches bei der jeweils gedämpften Strömung schließt und für eine umgekehrte Strömung öffnet.

7. Dämpfungseinrichtung nach Anspruch 5 oder 6,
**dadurch gekennzeichnet, dass** ein zwischen den zwei Dämpfungsventilen (30, 32) liegender Übergangsbereich (38) der hydraulischen Verbindung über einen Abzweig (40) mit dem Ausgleichsraum (16) verbunden ist.

8. Dämpfungseinrichtung nach Anspruch 2 und einem der Ansprüche 5 bis 7,
**dadurch gekennzeichnet, dass** die Zusatzventilanordnung (20) ein in der hydraulischen Verbindung zwischen dem Zylinderraum (12) und dem ersten Dämpfungsventil (30) angeordnetes Absperrventil (42) aufweist, wobei bevorzugt über einen Anschluss (46) ein Volumenteil des Dämpfungsmediums in den Zylinderraum (12) einführbar oder aus dem Zylinderraum (12) entnehmbar ist.

9. Dämpfungseinrichtung nach Anspruch 2 und einem der Ansprüche 5 bis 8,
**dadurch gekennzeichnet, dass** dieZusatzventilanordnung(20) ein in der hydraulischen Verbindung zwischen dem Ringraum (10) und dem zweiten Dämpfungsventil (32) angeordnetes Absperrventil (44) aufweist, wobei bevorzugt über einen Anschluss (48) ein Volumenteil des Dämpfungsmediums in den Ringraum (10) einführbar oder aus dem Ringraum (10) entnehmbar ist.

10. Dämpfungseinrichtung nach Anspruch 8 oder 9,
**dadurch gekennzeichnet, dass** das Absperrventil (42 und/oder 44) über einen Steueranschluss (50, 52) durch Beaufschlagung mit einem Steuerdruck (p_{St1}/p_{St2}) betätigbar ist.

11. Dämpfungseinrichtung nach einem der Ansprüche 2 bis 10,
**dadurch gekennzeichnet, dass** die Dämpfungsventilanordnung (14) mit der Zusatzventilanordnung (20) als eine gemeinsame, baueinheitliche Ventileinheit (54) ausgebildet ist.

12. Dämpfungseinrichtung nach Anspruch 11,
**dadurch gekennzeichnet, dass** dieVentileinheit(54)ein gemeinsames Ventilgehäuse (56) für die Dämpfungsventile (30, 32) und für die Absperrventile (42, 44) aufweist, wobei das Ventilgehäuse (56) jeweils einen Anschluss (58, 60, 62) für die Verbindungen zu den Arbeitsräumen (10, 12) und zu dem Ausgleichsraum (16), Anschlüsse (46, 48) zum Zuführen oder Entnehmen von Dämpfungsmedium sowie die Steueranschlüsse (50, 52) der Absperrventile (42, 44) aufweist.

13. Dämpfungseinrichtung nach einem der Ansprüche 3 bis 12,
**dadurch gekennzeichnet, dass** derVorratsbehälter(22)als Druckspeicher mit einem den Ausgleichsraum (16) von einer Druckkammer (64) trennenden Trennelement ausgebildet ist, wobei das Trennelement vorzugsweise als ein in dem zylindrischen Vorratsbehälter (22) frei verschiebbar geführter Trennkolben (66) ausgebildet ist.

14. Dämpfungseinrichtung nach Anspruch 13,
**dadurch gekennzeichnet, dass** die Druckkammer (64) ein insbesondere pneumatisches Druckmedium mit einem Vorspanndruck im Bereich von 5 bis 20 bar enthält.

15. Dämpfungseinrichtung nach einem der Ansprüche 1 bis 14,
**dadurch gekennzeichnet, dass** mindestens zwei Dämpferzylinder (2) mit dem gleichen Ausgleichsraum (16) hydraulisch verbunden sind.
